# EUROPÄISCHE PATENTSCHRIFT

(11) **EP 0 861 999 B1**
(45) Veröffentlichungstag und Bekanntmachung des Hinweises auf die Patenterteilung: **11.12.2002**
(21) Anmeldenummer: 97118665.5
(22) Anmeldetag: 28.10.1997
(51) Int. Cl.: F16J 15/32

(54) **Dichtring**
Sealing ring
Anneau d'étanchéité

(30) Priorität: 26.02.1997 DE 19707652
(43) Veröffentlichungstag der Anmeldung: 02.09.1998
(73) Patentinhaber: Carl Freudenberg KG, 69469 Weinheim (DE)
(72) Erfinder: Freitag, Edgar, Dr., 34613 Schwalmstadt (DE); Bergmann, Günter, 68542 Heddesheim (DE)

(56) Entgegenhaltungen:
- DE-A- 3 937 896
- FR-A- 2 294 367
- US-A- 3 172 341
- US-A- 4 827 834
- US-A- 5 492 053

## Beschreibung

### Technisches Gebiet

Die Erfindung betrifft einen Dichtring, umfassend einen Dichtkörper mit einer dynamisch beanspruchten Dichtlippe aus elastomerem Werkstoff, der einen ringförmigen Stützkörper zumindest teilweise umschließt, wobei der Stützkörper eine der Dichtlippe zugewandte Abschrägung aufweist und wobei der Dichtkörper auf der dem abzudichtenden Raum abgewandten Seite der Dichtlippe einen mit axialem Abstand benachbarten, dynamisch beanspruchten Dichtwulst aufweist, der die abzudichtende Fläche unter elastischer Vorspannung anliegend berührt.

### Stand der Technik

Ein solcher Dichtring ist aus der DE 39 37 896 A1 bekannt. Der vorbekannte Dichtring ist als Nutring-Dichtung ausgebildet, wobei der Dichtkörper und der Stützkörper kraftschlüssig verbunden sind. Der Stützkörper ist innerhalb des Dichtkörpers angeordnet und soll eine radiale Ausdehnung des Dichtkörpers am Stützkörper vorbei und ein daraus resultierendes radiales Abscheren des Dichtkörpers vom Stützkörper verhindern.

### Darstellung der Erfindung

Der Erfindung liegt die Aufgabe zugrunde, einen Dichtring der eingangs genannten Art derart weiterzuentwickeln, daß der Dichtring verbesserte Gebrauchseigenschaften und eine längere Gebrauchsdauer aufweist, dadurch, daß der Dichtwulst zu einer ausgezeichneten Abdichtung maßgeblich beiträgt.

Diese Aufgabe wird erfindungsgemäß durch die Merkmale von Anspruch 1 gelöst. Auf vorteilhafte Ausgestaltungen nehmen die Unteransprüche Bezug.

Zur Lösung der Aufgabe ist es im Rahmen der vorliegenden Erfindung vorgesehen, daß der Dichtwulst in axialer Richtung zwischen zwei Radialebenen angeordnet ist, durch die die Abschrägung axial begrenzt ist. Hierbei ist von Vorteil, daß der Dichtwulst im Bereich seiner Berührungsstelle mit der abzudichtenden Fläche von der Abschrägung des Stützkörpers axial überdeckt ist. Die Abstützung des Dichtwulstes durch die Abschrägung und seine elastische Anpressung an die abzudichtende Fläche sind während der gesamten Gebrauchsdauer des Dichtrings nahezu gleichbleibend. Die Ausgestaltung des Stützkörpers und dessen Zuordnung zum Dichtwulst bewirkt, daß der elastomere Werkstoff keinen gebrauchsdauerverringemden Biegemomenten, Schub- undloder Zugspannungen im Bereich des Dichtwulsts ausgesetzt ist. Dadurch, daß der Dichtwulst in axialer Richtung von der Abschrägung des Stützkörpers überdeckt ist, ergibt sich - bezogen auf Stützkörper ohne Abschrägung auf der der Dichtlippe zugewandten Seite - ein erheblicher Spannungsabbau innerhalb des elastomeren Werkstoffs im Bereich der Abschrägung, so daß ein Abscheren/Ablösen des elastomeren Werkstoffs vom Stützkörper zuverlässig verhindert wird. Der Spannungsabbau betrifft ebenfalls den Bereich der Bindeschicht zwischen elastomerem Werkstoff und Stützkörper.

Gemäß einer vorteilhaften Ausgestaltung kann das Verhältnis aus der Breite der Abschrägung und der Breite des Stützkörpers 0,2 bis 0,7, bevorzugt 0,3 bis 0,5 betragen. Hierbei ist von Vorteil, daß bei einem derartigen Verhältnis einerseits eine gute Abstützung/Führung des Dichtwulsts und andererseits ein ausreichend großer Spannungsabbau innerhalb des elastomeren Werkstoffs im Bereich der Abschrägung bedingt ist.

Die Spannungen innerhalb des elastomeren Werkstoffs sind bei Verwendung eines herkömmlichen, im Bereich des Dichtwulstes weitgehend rechteckig ausgebildeten Stützkörpers 2 größer als bei einer Ausführung, die eine Abschrägung im Sinne des beanspruchten Dichtrings aufweist.

Nach einer ersten Ausgestaltung kann die Abschrägung als Fase ausgebildet sein. Die Fase kann einen Winkel α von 20° bis 45°, bevorzugt 30° bis 45° bezogen auf die Achse aufweisen. Eine derartige Fase ist in fertigungstechnischer Hinsicht einfach und kostengünstig herstellbar.

Nach einer anderen Ausgestaltung kann die Abschrägung als in Richtung der Dichtlippe gewölbter Bogen ausgebildet sein. Entlang des Bogens sind die Spannungen weitgehend gleichmäßig verteilt und - im Vergleich zu einer als Fase ausgebildeten Abschrägung - höchstens etwa zwei Drittel so hoch.

Alle vom elastomeren Werkstoff umschlossenen Kanten des Stützkörpers sind bevorzugt gerundet ausgeführt, wobei die Kanten jeweils einen Radius von zumindest 0,3 mm haben. Hierbei ist von Vorteil, daß Spannungsspitzen innerhalb des elastomeren Dichtkörpers im Bereich der Kanten des Stützkörpers minimiert sind. Die Gefahr des Ablösens des elastomeren Werkstoffs vom Stützkörpers, der aus einem zähharten Werkstoff, beispielswiese aus einem metallischen Werkstoff besteht, ist dadurch weiter reduziert.

Die der abzudichtenden Fläche zugewandte Seite des Stützkörpers kann mit der Achse einem Winkel β von 5° bis 20°, bevorzugt 7° bis 15 ° einschließen und die der Dichtlippe abgewandte erste Stimseite der abzudichtenden Fläche weiter angenähert sein, als die der Dichtlippe zugewandte, zweite Stimseite. Eine derartige Ausgestaltung trägt unabhängig davon, ob die Abschrägung als Fase oder als Bogen ausgebildet ist, zu einer weiteren Reduzierung der Spannungen im elastomeren Werkstoff des Dichtrings bei. Hinsichtlich einer möglichst gleichmäßigen Spannungsverteilung innerhalb des elastomeren Werkstoffs ist es vorteilhaft, daß Richtungsänderungen in der Oberfläche des Stützkörpers möglichst allmählich und mit möglichst großen Radien erfolgen.

Der Dichtkörper ist zwischen den Radialebenen axial in Richtung der Dichtlippe in seinem Querschnitt trapezförmig erweitert. Durch den trapezförmigen Übergang des elastomeren Werkstoffs vom Dichtwulst in Richtung der Dichtlippe nimmt der Querschnitt des Dichtkörpers stetig zu. Durch die Vermeidung von Querschnittsschwächungen ist die Dauerhaltbarkeit des Dichtrings weiter verbessert.

Bevorzugt schließt die der abzudichtenden Fläche zugewandte Seite des Dichtkörpers von der der Dichtlippe axial abgewandten Stimseite bis zum Dichtwulst mit der Achse einen Winkel χ von 5° bis 15°, bevorzugt 7° bis 10° ein, wobei die abzudichtende Fläche und der Dichtkörper einen, sich von der Stirnseite in Richtung des Dichtwulsts verkleinernden keilförmigen Spalt begrenzen. Durch eine derartige Ausgestaltung wird bei einer translatorischen Bewegung der abzudichtenden Fläche, relativ zum Dichtring eine gute Rückförderung des zur Schmierung der Dichtlippe und des Dichtwulsts verwendeten, abzudichtenden Mediums in Richtung des abzudichtenden Raums bewirkt.

Die Dichtlippe und der Dichtwulst sind bevorzugt jeweils durch zwei einander durchschneidende Kegelflächen begrenzt, wobei die dem abzudichtenden Raum zugewandten Kegelflächen mit der Achse einen größeren Winkel einschließen als die dem abzudichtenden Raum abgewandten Kegelflächen. Entsprechend der zuvor beschreibenen Wirkung des Winkels χ wird durch eine derartige Ausgestaltung von Dichtlippe und Dichtwulst einerseits eine ausgezeichnete Abdichtung des abzudichtenden Raums bei relativ translatorisch zueinander bewegten Maschinenteilen bewirkt. Andererseits wird eine gute Schmierung von Dichtlippe und Dichtwulst bewirkt. Das zur Schmierung von Dichtlippe und Dichtwulst dienende, abzudichtende Medium wird bei hin- und hergehender Bewegung der Maschinenteile durch die flachen Winkel der dem abzudichtenden Raum abgewandten Kegelflächen in den abzudichtenden Raum zurückgefördert.

Der erfindungsgemäße Dichtring ist bevorzugt als Nutring zur Abdichtung von zwei translatorisch zueinander bewegten Maschinenteilen ausgebildet, beispielsweise Getriebekolben, wobei der Nutring in Abhängigkeit vom jeweiligen Anwendungsfall in einer nach außen offenen Nut einer Stange angeordnet sein kann und ein die Stange radial außenseitig umschließendes Gehäuse mit seiner Dichtlippe und dem Dichtwulst unter elastischer Vorspannung anliegend berührt. Nach einer anderen Ausgestaltung besteht die Möglichkeit, daß der Dichtring in einer radial nach innen offenen Nut eines Gehäuses angeordnet ist und mit seiner Dichtlippe und dem Dichtwulst eine durch das Gehäuse geführte Stange dichtend umschließt.

Der Dichtring wird nachfolgend anhand von zwei Ausführungsbeispielen näher erläutert.

### Kurzbeschreibung der Zeichnungen

Diese zeigen in schematischer Darstellung:

In Figur 1 ein erstes Ausführungsbeispiel eines Dichtrings, der als Nutring ausgebildet und in einer radial nach außen offenen Nut einer Stange angeordnet ist und einen Stützkörper aufweist, der eine der Dichtlippe zugewandte Abschrägung in Form einer Fase aufweist.

In Figur 2 ein zweites Ausführungsbeispiel, bei dem der Dichtring als Nutring ausgebildet ist und in einer radial nach innen offene Nut eines Gehäuses angeordnet ist und eine durch das Gehäuse geführte Stange dichtend umschließt. Der Stützkörper ist mit einer der Dichtlippe zugewandten Abschrägung in Form eines Bogens versehen.

### Ausführung der Erfindung

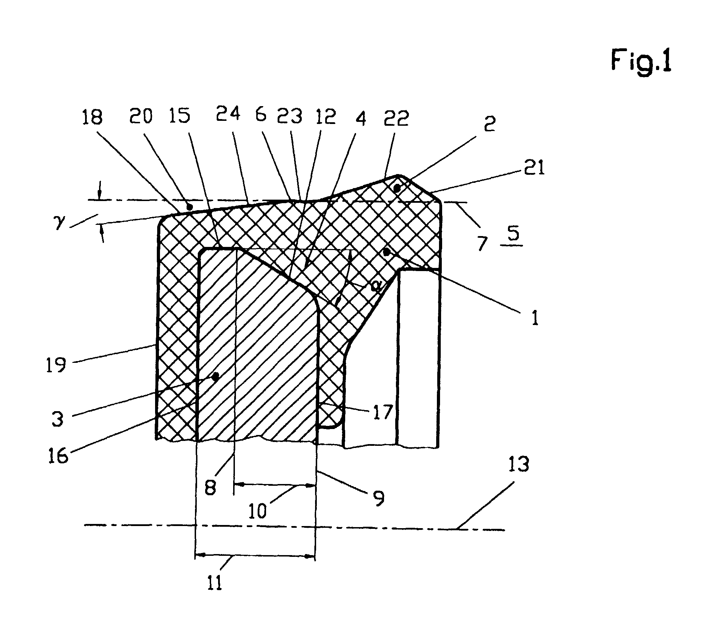

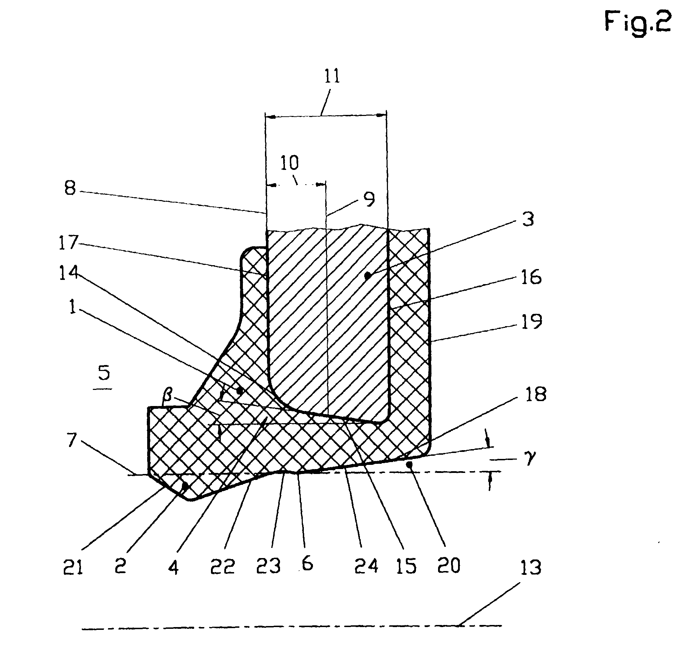

In den Figuren 1 und 2 ist jeweils ein Dichtring gezeigt, der als Nutring ausgebildet ist. Die erfindungsgemäßen Dichtringe können jedoch auch Bestandteile eines Fertigkolbens sein. Der Dichtring in den Figuren 1 und 2 umfaßt einen Dichtkörper 1 und einen ringförmigen Stützkörper 3. Der Dichtkörper 1 besteht aus einem elastomeren Werkstoff und ist mit einer dynamisch beanspruchten Dichtlippe 2 versehen sowie einem ebenfalls dynamisch beanspruchten Dichtwulst 6, wobei die Dichtlippe 2 und der Dichtwulst 6 in diesem Ausführungsbeispiel materialeinheitlich und einstückig ineinander übergehend ausgebildet sind. Im Hinblick auf eine einfache, kostengünstige Herstellung ist das von hervorzuhebendem Vorteil. Der Stützkörper 3 besteht aus einem zähharten Werkstoff, in diesem Beispiel aus Metall und weist eine der Dichtlippe 2 zugewandte Abschrägung 4 auf. Der Dichtwulst 6 ist auf der dem abzudichtenden Raum 5 abgewandten Seite der Dichtlippe 2 angeordnet, wobei sowohl die Dichtlippe 2 als auch der Dichtwulst 6 die abzudichtende Fläche 7, die sich bezogen auf den Dichtring translatorisch hin- und herbewegt, unter elastischer Vorspannung dichtend berührt.

Die Abschrägung 4 ist in axialer Richtung beiderseits durch zwei gedachte Radialebenen 8, 9 begrenzt, wobei der Dichtwulst 6 in axialer Richtung zwischen den beiden Radialebenen 8,9 angeordnet ist.

In den hier gezeigten Ausführungsbeispielen ist das Verhältnis aus der Breite 10 der Abschrägung 4 und der Breite 11 des Stützkörpers 3 jeweils 0,5, wobei der Dichtwulst 6 in axialer Richtung mittig zwischen den Radialebenen 8,9 angeordnet ist. Sowohl in Figur 1 als auch in Figur 2 ist der Dichtring zum besseren Verständnis im nicht-eingebauten Zustand gezeigt.

In Figur 1 ist ein erstes Ausführungsbeispiel des erfindungsgemäßen Dichtrings gezeigt, bei dem die Dichtlippe 2 und der Dichtwulst 6 radial außenseitig angeordnet sind und eine schematisch angedeutete, abzudichtende Fläche 7, die Bestandteil eines Gehäuses ist, unter elastischer Vorspannung dichtend berühren. Der Dichtring selbst ist in einer in Richtung der abzudichtenden Fläche 7 offenen Nut einer Stange angeordnet, wobei sich das Gehäuse und die Stange translatorisch zueinander bewegen.

Die Achse der Stange und der Bohrung im Gehäuse ist mit 13 bezeichnet.

In diesem Ausführungsbeispiel ist die Abschrägung 4 als Fase 12 ausgebildet und weist einen Winkel α von 30° bezogen auf die Achse 13 auf.

In Figur 2 ist die Abschrägung 4 als in Richtung der Dichtlippe 2 gewölbter Bogen 14 ausgebildet, wobei die der abzudichtenden Fläche 7 zugewandte Seite 15 des Stützkörpers 3 mit der Achse 13 eine Winkel β von 7° einschließt. Von entscheidender Wichtigkeit für einen effizienten Spannungsabbau im elastomeren Werkstoff des Dichtkörpers 1, ist ein möglichst fließender Übergang in der Geometrie des Stützkörpers 3. Durch den großen Radius des Bogens 14 sowie die unter dem Winkel β verlaufende Seite 15 des Stützkörpers 3, weist der Dichtkörper nur geringe innere Spannungen auf, so daß eine mechanische Überbeanspruchung und eine dadurch bedingte Ablösung des Elastomerwerkstoffs vom Stützkörper und/oder ein Abscheren der Dichtlippe 2 vom Stützkörper 3 sicher auszuschließen.

In beiden Ausführungsbeispielen sind die vom elastomeren Werkstoff des Dichtkörpers 1 umschlossenen Kanten des Stützkörpers 3 gerundet ausgeführt, um Kerbwirkungen und mechanische Überbeanspruchungen im elastomeren Werkstoff des Dichtkörpers zu vermeiden.

Die vorteilhafte Anordnung des Dichtwulsts 6 zwischen den beiden Radialebenen 8,9 bewirkt, daß die mechanischen Beanspruchungen des dynamisch beanspruchten Dichtkörpers 1 während der bestimmungsgemäßen Verwendung des Dichtrings gering gehalten werden und der Dichtring dadurch gleichbleibend gute Gebrauchseigenschaften während einer langen Gerauchsdauer aufweist. Auch die Geometrie des Dichtkörpers trägt maßgeblich zu den guten Gebrauchseigenschaften und der guten Haltbarkeit des Dichtrings bei. Zwischen den Radialebenen 8,9 ist der Dichtkörper 1 in Richtung der Dichtlippe 2 in seinem Querschnitt trapezförmig erweitert, um eine gute Dauerhaltbarkeit zu erzielen.

Als Werkstoff für den Dichtkörper 1 gelangen bevorzugt elastomere Werkstoffe wie NBR und ACM und/oder thermoplastische Elastomere wie Polyurethan zur Anwendung.

## Patentansprüche

1. Dichtring, umfassend einen Dichtkörper (1) mit einer dynamisch beanspruchten Dichtlippe (2) aus elastomerem Werkstoff, der einen ringförmigen Stützkörper (3) zumindest teilweise umschließt, wobei der Stützkörper eine der Dichtlippe zugewandte Abschrägung (4) aufweist und wobei der Dichtkörper auf der dem abzudichtenden Raum (5) abgewandten Seite der Dichtlippe einen mit axialem Abstand benachbarten, dynamisch beanspruchten Dichtwulst (6) aufweist, der die abzudichtende Fläche unter elastischer Vorspannung dichtend berührt, **dadurch gekennzeichnet, daß** der Dichtwulst (6) in axialer Richtung zwischen zwei Radialebenen (8, 9) angeordnet ist, durch die die Abschrägung (4) des Stützkörpers (3) axial begrenzt ist.

2. Dichtring, nach Anspruch 1, **dadurch gekennzeichnet, daß** das Verhältnis aus der Breite (10) der Abschrägung (4) und der Breite (11) des Stützkörpers (3) 0,2 bis 0,7 beträgt.

3. Dichtring nach einem der Ansprüche 1 oder 2, **dadurch gekennzeichnet, daß** die Abschrägung (4) als Fase (12) ausgebildet ist.

4. Dichtring nach Anspruch 3, **dadurch gekennzeichnet, daß** die Fase (12) einen Winkel α von 20° bis 45° bezogen auf die Achse (13) aufweist.

5. Dichtring nach einem der Ansprüche 1 oder 2, **dadurch gekennzeichnet, daß** die Abschrägung (4) als in Richtung der Dichtlippe (2) gewölbter Bogen (14) ausgebildet ist.

6. Dichtring nach einem der Ansprüche 1 bis 5, **dadurch gekennzeichnet, daß** alle vom elastomeren Werkstoff umschlossenen Kanten des Stützkörpers (3) gerundet ausgeführt sind und daß die Kanten jeweils einen Radius von zumindest 0,3 mm haben.

7. Dichtring nach einem der Ansprüche 1 bis 6, **dadurch gekennzeichnet, daß** die der abzudichtenden Fläche (7) zugewandte Seite (15) des Stützkörpers (3) mit der Achse (13) einen Winkel β von 5° bis 20° einschließt und die der Dichtlippe (2) abgewandte erste Stirnseite (16) der abzudichtenden Fläche (7) weiter angenähert ist, als die der Dichtlippe (2) zugewandte zweite Stirnseite (17).

8. Dichtring nach einem der Ansprüche 1 bis 7, **dadurch gekennzeichnet, daß** der Dichtkörper (1) zwischen den Radialebenen (8, 9) in Richtung der Dichtlippe (2) in seinem Querschnitt trapezförmig erweitert ist.

9. Dichtring nach einem der Ansprüche 1 bis 8, **dadurch gekennzeichnet, daß** die der abzudichtenden Fläche (7) zugewandte Seite (18) des Dichtkörpers (1), von der der Dichtlippe (2) axial abgewandten Stirnseite (19) bis zum Dichtwulst (6), mit der Achse (13) einen Winkel χ von 5° bis 15° einschließt und daß die abzudichtende Fläche (7) und der Dichtkörper (1) einen sich von der Stirnseite (19) in Richtung des Dichtwulstes (6) verkleinernden, keilförmigen Spalt (20) begrenzen.

10. Dichtring nach einem der Ansprüche 1 bis 9, **dadurch gekennzeichnet, daß** die Dichtlippe (2) und der Dichtwulst (6) jeweils durch zwei einander durchschneidende Kegelfächen (21, 22; 23, 24) begrenzt sind und daß die dem abzudichtenden Raum (5) zugewandten Kegelflächen (21, 23) mit der Achse (13) einen größeren Winkel einschließen, als die dem abzudichtenden Raum (5) abgewandten Kegelflächen (22, 24).

## Claims

1. A sealing ring, comprising a sealing body (1) with a dynamically loaded sealing lip (2) made of elastomeric material, which at least partially encloses an annular supporting body (3), the supporting body having a bevel (4) facing the sealing lip and the sealing body having on the side of the sealing lip facing away from the space (5) to be sealed a dynamically loaded sealing bead (6), which is alongside an axial distance away and comes into contact with the face to be sealed in a sealing manner under flexible prestress, **characterized in that** the sealing bead (6) is arranged in the axial direction between two radial planes (8, 9), by which the bevel (4) of the supporting body (3) is axially delimited.

2. A sealing ring according to claim 1, **characterized in that** the ratio of the width (10) of the bevel (4) and the width (11) of the supporting body (3) is 0.2 to 0.7.

3. A sealing ring according to either of claims 1 and 2, **characterized in that** the bevel (4) is formed as a chamfer (12).

4. A sealing ring according to claim 3, **characterized in that** the chamfer (12) has an angle α of from 20° to 45° with respect to the axis (13).

5. A sealing ring according to either of claims 1 and 2, **characterized in that** the bevel (4) is formed as an arc (14) convexly curved in the direction of the sealing lip (2).

6. A sealing ring according to any one of claims 1 to 5, **characterized in that** all the edges of the supporting body (3) which are surrounded by the elastomeric material are of a rounded configuration and **in that** the edges respectively have a radius of at least 0.3 mm.

7. A sealing ring according to any one of claims 1 to 6, **characterized in that** the side (15) of the supporting body (3) which is facing the face (7) to be sealed encloses with the axis (13) an angle β of from 5° to 20°, and the first front side (16), facing away from the sealing lip (2), is brought closer to the face (7) to be sealed than the second front side (17), facing the sealing lip (2).

8. A sealing ring according to any one of claims 1 to 7, **characterized in that** the sealing body (1) is trapezoidally widened in its cross section between the radial planes (8, 9) in the direction of the sealing lip (2).

9. A sealing ring according to any one of claims 1 to 8, **characterized in that**, from the front side (19) facing axially away from the sealing lip (2) up to the sealing bead (6), the side (18) of the sealing body (1) facing the face (7) to be sealed encloses with the axis (13) an angle χ of from 5° to 15°, and **in that** the face (7) to be sealed and the sealing body (1) bound a wedge-shaped gap (20) which becomes smaller from the end face (19) in the direction of the sealing bead (6).

10. A sealing ring according to any one of claims 1 to 9, **characterized in that** the sealing lip (2) and the sealing bead (6) are respectively bounded by two tapering faces (21, 22; 23, 24) intersecting each other and **in that** the tapering faces (21, 23) facing the space (5) to be sealed enclose with the axis (13) a larger angle than the tapering faces (22, 24) facing away from the space (5) to be sealed.

## Revendications

1. Anneau d'étanchéité comprenant un corps d'étanchéité (1) avec une lèvre d'étanchéité (2) sollicitée dynamiquement, en matériau élastomère, cet anneau d'étanchéité entourant au moins en partie un corps de soutien (3) en forme d'anneau, le corps de soutien présentant une inclinaison (4) tournée vers la lèvre d'étanchéité et le corps d'étanchéité présentant, du côté de la lèvre d'étanchéité détourné de l'espace (5) à rendre étanche, un bourrelet d'étanchéité (6) adjacent avec écartement radial, sollicité dynamiquement, le bourrelet d'étanchéité touchant la surface à rendre étanche de manière étanche sous prétension élastique, **caractérisé en ce que** le bourrelet d'étanchéité (6) est disposé en direction axiale entre deux niveaux radiaux (8, 9), par lesquels l'inclinaison (4) du corps de soutien (3) est délimitée de manière axiale.

2. Anneau d'étanchéité selon la revendication 1, **caractérisé en ce que** le rapport résultant de la largeur (10) de l'inclinaison (4) et de la largeur (11) du corps de soutien (3) est de 0,2 à 0,7.

3. Anneau d'étanchéité selon la revendication 1 ou 2, **caractérisé en ce que** l'inclinaison (4) est formée comme chanfrein (12).

4. Anneau d'étanchéité selon la revendication 3, **caractérisé en ce que** le chanfrein (12) présente un angle α de 20° à 45° par rapport à l'axe(13).

5. Anneau d'étanchéité selon l'une des revendications 1 ou 2, **caractérisé en ce que** l'inclinaison (4) est formée comme un arc (14) bombé en direction de la lèvre d'étanchéité (2).

6. Anneau d'étanchéité selon l'une des revendications 1 à 5, **caractérisé en ce que** tous les bords du corps de soutien (3) entourés par le matériau élastomère sont exécutés de manière arrondie et que les bords ont respectivement un rayon d'au moins 0,3 mm.

7. Anneau d'étanchéité selon l'une des revendications 1 à 6, **caractérisé en ce que** le côté (15) du corps de soutien (3) tourné vers la surface (7) à rendre étanche comprend un angle β de 5° à 20° avec l'axe (13) et **en ce que** le premier côté frontal (16) détourné de la lèvre d'étanchéité (2) de la surface (7) à rendre étanche est plus rapproché que le second côté frontal (17) tourné vers la lèvre d'étanchéité (2).

8. Anneau d'étanchéité selon l'une des revendications 1 à 7, **caractérisé en ce que** la section du corps d'étanchéité (1) est élargie de manière trapézoïdale en direction de la lèvre d'étanchéité entre les niveaux radiaux (8, 9).

9. Anneau d'étanchéité selon l'une des revendications 1 à 8, **caractérisé en ce que** le côté (18) du corps d'étanchéité (1) tourné vers la surface (7) à rendre étanche, comprend, du côté frontal (19) détourné axialement de la lèvre d'étanchéité (2) jusqu'au bourrelet d'étanchéité (6), un angle χ de 5° à 15° avec l'axe (13), et **en ce que** la surface (7) à rendre étanche et le corps d'étanchéité (1) délimitent un écartement (20) en forme de clavette, se rétrécissant depuis le côté frontal (19) en direction du bourrelet d'étanchéité (6).

10. Anneau d'étanchéité selon l'une des revendications 1 à 9, **caractérisé en ce que** la lèvre d'étanchéité (2) et le bourrelet d'étanchéité (6) sont respectivement délimités par deux surfaces coniques (21, 22 ; 23, 24) s'entrecoupant, et **en ce que** les surfaces coniques (21, 23) tournées vers l'espace (5) à rendre étanche comprennent, avec l'axe (13), un angle plus grand que les surface coniques (22, 24) détournées de l'espace (5) à rendre étanche.
